# EUROPÄISCHE PATENTANMELDUNG

(11) **EP 2 161 569 A2**
(43) Veröffentlichungstag der Anmeldung: **10.03.2010**
(21) Anmeldenummer: 09011291.3
(22) Anmeldetag: 03.09.2009
(51) Int. Cl.: G01N 27/417, F02D 41/14, F02D 41/24

(54) **Verfahren zum Kalibrieren eines NOx- /Lambda-Sensors**

(30) Priorität: 05.09.2008 DE 102008046121
(71) Anmelder: DEUTZ Aktiengesellschaft, 51149 Köln (DE)
(72) Erfinder: Röth, Elmar, 56283 Nörtershausen (DE); Siegert, Harald, 51061 Köln (DE)

(57) **Zusammenfassung**

1. Verfahren zum Kalibrieren eines NOx- / Lambda-Sensors
2.1 Die Erfindung betrifft ein Verfahren zum Kalibrieren eines von einem in einer Abgasleitung einer Brennkraftmaschine angeordneten Sensors, insbesondere eines NOx-Sensors und/oder eines Lambda-Sensors, bereitgestellten Messsignals, wobei das von einer Messspitze des Sensors ermittelte Messsignal in Abhängigkeit der NOx-Konzentration in einer Kennlinie darstellbar ist, und wobei die Kennlinie eine kontinuierlich oder diskontinuierlich abzugleichende Nullpunktabweichung aufweist.
2.2 Erfindungsgemäß wird ein Verfahren zum Kalibrieren eines Sensors 3 angegeben, das unabhängig von einem Schiebebetrieb der Brennkraftmaschine durchführbar ist. Dies wird dadurch erreicht, dass die Abgleichung im normalen Brennkraftmaschinenbetrieb durch ein Vorbeiströmen von Spülluft an der Messspitze 4 des Sensors 3 erfolgt. Dazu wird die Messspitze 4 entweder aus der Abgasleitung 1 ausgeblendet oder aber Spülluft gezielt an die Messspitze 4 geblasen.

## Beschreibung

Die Erfindung betrifft ein Verfahren zum Kalibrieren eines von einem in einer Abgasleitung einer Brennkraftmaschine angeordneten Sensors, insbesondere eines NOx-Sensors und/oder eines Lambda-Sensors, bereitgestellten Messsignals, wobei das von einer Messspitze des Sensors ermittelte Messsignal in Abhängigkeit der NOx-Konzentration in einer Kennlinie darstellbar ist, und wobei die Kennlinie eine kontinuierlich oder diskontinuierlich abzugleichende Nullpunktabweichung aufweist.

Ein solches Verfahren ist aus der DE 10 2005 056 152 A1 bekannt. Hierbei erfolgt die Feststellung des Korrekturwertes in Abhängigkeit von der Sensortemperatur während eines vorgegebenen Betriebszustands der Brennkraftmaschine. Dieser Betriebszustand entspricht einem Schiebebetrieb einer Brennkraftmaschine, bei welchem im Ansaugbereich und im Abgasbereich eine zumindest geringe Luftströmung auftritt, die darüber hinaus weitgehend der Zusammensetzung der Umgebungsluft entspricht, da in der Brennkraftmaschine keine Kraftstoff-Verbrennung stattfindet.

Der Erfindung liegt die Aufgabe zugrunde, ein Verfahren zum Kalibrieren eines Sensors anzugeben, das unabhängig von einem Schiebebetrieb der Brennkraftmaschine durchführbar ist.

Diese Aufgabe wird dadurch gelöst, dass die Abgleichung im normalen Brennkraftmaschinenbetrieb durch ein Vorbeiströmen von Spülluft an der Messspitze des Sensors erfolgt. Dieses Verfahren hat den Vorteil, dass es unabhängig von dem Betriebszustand der Brennkraftmaschine quasi jederzeit durchgeführt werden kann und kein entsprechend großes Zeitfenster abgewartet werden muss, in dem in der Abgasleitung durch eine nicht stattfindende Verbrennung von Brennstoff in der Brennkraftmaschine in der Abgasleitung eine Luftzusammensetzung eingestellt ist, die zumindest angenähert der Umgebungsluft entspricht. Vielmehr wird dadurch, dass die Abgleichung während des normalen Brennkraftmaschinenbetriebs erfolgt, die Möglichkeit geschaffen, die Abgleichung in beispielsweise festen Zeitabständen durchzuführen. Dadurch ist sichergestellt, dass die Kennlinie immer genau zum Nullpunkt abgeglichen ist. Dadurch kann die Abgasnachbehandlung, die mit den von der Messspitze des Sensors festgestellten Messsignalen zumindest beeinflusst wird, genauer gesteuert werden.

In einem ersten erfindungsgemäßen durchgeführten Verfahren wird die Spülluft in die Abgasleitung unter Verdrängung des im Bereich der Messspitze des Sensors strömenden Abgases eingeleitet. Bei diesem Verfahren wird also zeitlich begrenzt an die Messspitze Spülluft geführt, so dass die Kalibrierung durchgeführt werden kann. Dabei wird die Spülluft bevorzugt über eine Kalibrierleitung in die Abgasleitung eingeblasen, wobei weiterhin die Messspitze des Sensors in einer vom Abgas der Brennkraftmaschine nur schwach durchströmten Zone der Abgasleitung angeordnet sein kann. Diese Zone kann beispielsweise durch eine entsprechend angeordnete Abschirmvorrichtung geschaffen sein, wobei durch die schwache Durchströmung für den normalen Betrieb des Sensors beziehungsweise der Brennkraftmaschine sichergestellt ist, dass die tatsächlichen Abgasemissionen gemessen werden. Andererseits ist durch eine solche beruhigte Zone sichergestellt, dass auch bei Volllastbetrieb der Brennkraftmaschine eine Kalibrierung durchgeführt werden kann und die dabei einzublasende Luftmenge gering ist. Die Spülluft, die normalerweise Umgebungsluft ist, wird von einer beliebig ausgestalteten Luftpumpe, die beispielsweise auch ein an der Brennkraftmaschine verbauter Kompressor sein kann, gefördert. Dabei kann die geförderte Spülluft auch in einen Speicher gefördert werden und aus diesem Speicher abgerufen werden. In weiterer Ausgestaltung ist es vorgesehen, die Abschirmvorrichtung nur für einen Kalibriervorgang in die Abgasleitung einzuschieben. Dies kann beispielsweise durch eine pneumatische Vorrichtung erfolgen, die automatisch bei Einleitung eines Kalibriervorgangs und somit erfolgender Einblasung von Spülluft in die Kalibrierleitung die pneumatische Vorrichtung die Abschirmvorrichtung von einer Ruhestellung in eine Kalibrierstellung verfährt.

In einem alternativen Verfahren wird die Messspitze des Sensors während des Kalibriervorgangs aus der Abgasleitung ausgeblendet. Dies wird dadurch vorgenommen, dass die Messspitze des Sensors aus der Abgasleitung mechanisch, pneumatisch oder elektrisch betätigt herausbewegt wird. Dies kann dadurch erfolgen, dass der Sensor soweit aus der Abgasleitung herausgezogen wird, bis die Messspitze außerhalb der Abgasleitung liegt oder aber der Sensor wird so tief in die Abgasleitung hineingefahren, bis die Messspitze auf der gegenüberliegenden Seite durch eine Öffnung in der Abgasleitung in die Umgebung austritt. Diese Öffnung kann beispielsweise durch eine selbstschließende (federbelastete) Klappe während der Zeit, in der keine Kalibrierung stattfindet, verschlossen sein. Die aus der Abgasleitung ausgeblendete Messspitze kann zusätzlich von Spülluft umströmt sein.

Weitere vorteilhafte Ausgestaltungen der Erfindung sind der Zeichnungsbeschreibung zu entnehmen, in der in der Zeichnung dargestellte Ausführungsbeispiele näher beschrieben sind.

Es zeigen:
- Fig. 1: die normale Betriebsstellung des in die Abgasleitung hineinragenden Sensors,
- Fig. 2: eine Kalibrierstellung des Sensor durch Ausblendung aus der Abgasleitung und
- Fig. 3: eine Kalibrierung des Sensors durch Einblasung von Spülluft in die Abgasleitung.

Von einer nicht dargestellten Brennkraftmaschine wird das bei dem Verbrennungsvorgang von Kraftstoff und Verbrennungsluft entstehende Abgas über eine Abgasleitung 1 zu einer ebenfalls nicht dargestellten Vorrichtung zur Abgasnachbehandlung und/oder einem Abgasschalldämpfer geleitet. An der Abgasleitung 1 ist ein Befestigungsflansch 2 angebracht, der, ebenso wie die Abgasleitung 1, eine konzentrisch zueinander ausgebildete Öffnung aufweist, durch die ein Sensor, insbesondere ein NOx- und/oder Lambda-Sensor 3, dichtend geführt und gehalten ist. Der Sensor 3 ragt mit einer Messspitze 4 in etwa mittig in das Zentrum der Abgasleitung 1 hinein. Die Messspitze 4 enthält ein Messelement, mit dem die interessierenden Emissionsbestandteile des Abgases ermittelt werden können. Das Messelement erzeugt in Abhängigkeit von der Konzentration der jeweiligen Emissionen Messsignale, die als Kennlinie darstellbar sind. Dabei ist die Steigung der Kennlinie unabhängig von der Betriebsdauer des Sensors konstant, nicht konstant ist aber die Abweichung eines Referenzpunktes der Kennlinie von einem Bezugspunkt innerhalb des entsprechenden Koordinatensystems (Nullpunktabweichung). Diese Abweichung (auch Offset genannt) muss kontinuierlich oder diskontinuierlich abgeglichen beziehungsweise kalibriert werden. Diese Abgleichung erfolgt dadurch, dass das Messelement mit Spülluft umströmt wird. Die Spülluft weist anders als das Abgas einen nahezu konstanten und bekannten NOx-Wert auf, anhand dessen dann der Abgleich beziehungsweise die Kalibrierung vorgenommen werden kann.

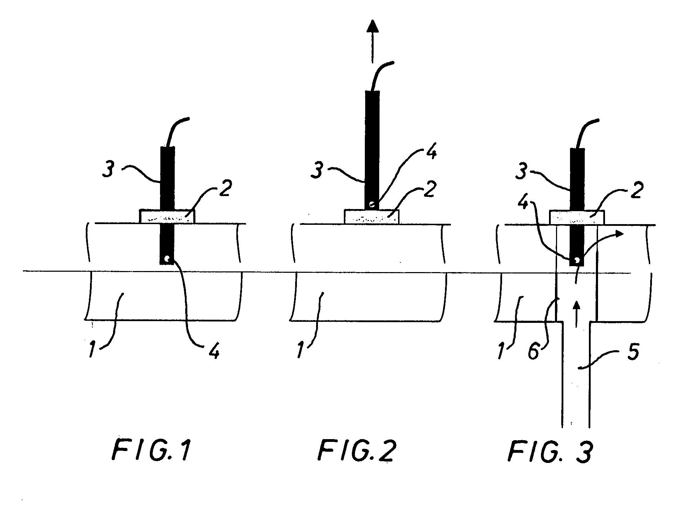

Gemäß dem Ausführungsbeispiel in Fig. 2 wird für die Kalibrierung der Sensor 3 aus der Abgasleitung 1 ausgeblendet. Dies erfolgt in dem dargestellten Ausführungsbeispiel dadurch, dass der Sensor 3 soweit aus der Abgasleitung 1 herausgezogen wird, dass die Messspitze 4 mit dem Messelement außerhalb des Befestigungsflansches 2 liegt und mit Spülluft beziehungsweise Umgebungsluft, die auch gezielt an diese Stelle gefördert werden kann, beaufschlagt wird. Der Sensor 3 ist dabei bevorzugt so ausgestaltet, dass noch ein Führungsabschnitt des Sensors 3 in den Befestigungsflansch 2 hineinragt. Ebenso sind an dem Sensor 3 Anschläge vorgesehen, die eine definierte Betriebsstellung (Fig. 1) und eine Kalibrierstellung (Fig. 2) bestimmen. Zwischen diesen beiden Stellungen kann der Sensor 3 beispielsweise durch eine pneumatische Einrichtung hin und her bewegt werden.

Bei dem Ausführungsbeispiel gemäß Fig. 3 verbleibt der Sensor 3 in der normalen Betriebsstellung (Fig. 1) und es wird für den Kalibriervorgang gezielt Spülluft an die Messspitze 4 und somit an das Messelement herangeführt. Dies erfolgt durch eine Kalibrierleitung 5, durch die Spülluft an die Messspitze 4 geblasen wird. Um die Spülluft zielgenau an die Messspitze 4 zu fördern und das durch die Abgasleitung 1 strömende Abgas von der Messspitze 4 während des Kalibriervorgangs fernzuhalten, ist eine Abschirmvorrichtung 6 vorhanden, die die Spülluft zielgenau an die Messspitze 4 leitet. Die Abschirmvorrichtung kann beispielsweise durch eine pneumatische Einrichtung beim normalen Betriebszustand (Fig. 1) aus der Abgasleitung 1 ausgeblendet werden.

### Bezugszeichen

- 1: Abgasleitung
- 2: Befestigungsflansch
- 3: Sensor
- 4: Messspitze
- 5: Kalibrierleitung
- 6: Abschirmvorrichtung

## Patentansprüche

1. Verfahren zum Kalibrieren eines von einem in einer Abgasleitung einer Brennkraftmaschine angeordneten Sensors, insbesondere eines NOx-Sensors und/oder eines Lambda-Sensors, bereitgestellten Messsignals, wobei das von einer Messspitze des Sensors ermittelte Messsignal in Abhängigkeit der NOx-Konzentration in einer Kennlinie darstellbar ist, und wobei die Kennlinie eine kontinuierlich oder diskontinuierlich abzugleichende Nullpunktabweichung aufweist,
**dadurch gekennzeichnet, dass** die Abgleichung im normalen Brennkraftmaschinenbetrieb durch ein Vorbeiströmen von Spülluft an der Messspitze (4) erfolgt.

2. Verfahren nach Anspruch 2,
**dadurch gekennzeichnet, dass** die Spülluft in die Abgasleitung (1), das im Bereich der Messspitze (4) strömende Abgas verdrängend, eingeführt wird.

3. Verfahren nach Anspruch 2,
**dadurch gekennzeichnet, dass** die Spülluft über eine Kalibrierleitung (5) in die Abgasleitung (1) eingeblasen wird.

4. Verfahren nach einem der vorherigen Ansprüche,
**dadurch gekennzeichnet, dass** die Spülluft von einer Luftpumpe gefördert wird.

5. Verfahren nach Anspruch 1,
**dadurch gekennzeichnet, dass** die Messspitze (4) des Sensors (3) aus der Abgasleitung (1) ausgeblendet wird.

6. Verfahren nach Anspruch 5,
**dadurch gekennzeichnet, dass** die Messspitze (4) des Sensors (3) aus der Abgasleitung (1) mechanisch, pneumatisch oder elektrisch betätigt herausbewegt wird.
